**Europäisches Patentamt**

**European Patent Office**

**Office européen des brevets**

(11) Veröffentlichungsnummer : **0 419 867 B1**

(12)

# EUROPÄISCHE PATENTSCHRIFT

(45) Veröffentlichungstag der Patentschrift :
**30.11.94 Patentblatt 94/48**

(51) Int. Cl.$^5$ : **H02J 7/14**

(21) Anmeldenummer : **90116444.2**

(22) Anmeldetag : **28.08.90**

(54) **Verfahren zur Spannungsregelung.**

(30) Priorität : **25.09.89 DE 3931897**

(43) Veröffentlichungstag der Anmeldung :
**03.04.91 Patentblatt 91/14**

(45) Bekanntmachung des Hinweises auf die
Patenterteilung :
**30.11.94 Patentblatt 94/48**

(84) Benannte Vertragsstaaten :
**DE ES FR GB IT**

(56) Entgegenhaltungen :
**FR-A- 1 554 212**
**FR-A- 2 562 733**
**FR-A- 2 572 860**
**US-A- 4 629 967**

(73) Patentinhaber : **ROBERT BOSCH GMBH**
**Postfach 30 02 20**
**D-70442 Stuttgart (DE)**

(72) Erfinder : **Aumayer, Richard, Dipl.-Chem**
**Ahornweg 8**
**D-3201 Diekholzen (DE)**

EP 0 419 867 B1

## Beschreibung

### Stand der Technik

Die Erfindung geht aus von einem Verfahren zur Regelung der Ausgangsspannung eines Generators, der zur Ladung einer Batterie verwendet wird, wobei sichergestellt werden soll, daß unabhängig von der herrschenden Umgebungstemperatur oder Batterietemperatur eine optimale Batterieladung ermöglicht wird.

Es ist bekannt, die Ausgangsspannung von Generatoren, die zur Spannungsversorgung eines Bordnetzes sowie zur Ladung einer Batterie dienen, beispielsweise Drehstromgeneratoren in Kraftfahrzeugen, in Abhängigkeit von der Temperatur so zu regeln, daß sie bei tiefen Temperaturen höhere Werte aufweist als bei hohen Temperaturen. Eine derartige Spannungsregelung wird durchgeführt, da die üblicherweise in Kraftfahrzeugen eingesetzten Bleiakkumulatoren infolge ihres stark von der Temperatur abhängigen Innenwiderstands zur Volladung eine stark temperaturabhängige Spannung verlangen, damit die Temperaturabhängigkeit des Innenwiderstands der Batterie kompensiert wird.

Ein Spannungsregler, der eine derartige Temperaturkompensation für die Ausgangsspannung des Generators bzw. der entsprechenden Ladespannung für die Batterie aufweist, ist beispielsweise aus der DE-AS 16 38 065 bekannt. Dabei erfolgt mit steigender Temperatur eine lineare Absenkung der Ladespannung.

Insgesamt muß bei der Spannungsregelung jedoch berücksichtigt werden, daß die Ladespannung nicht zu hoch wird, da bei Überschreitung der Gasungsspannung eine unerwünschte Wasserzersetzung in der Batterie stattfindet. Die Gasungsspannung selbst ist ebenfalls von der Temperatur abhängig, sie sinkt mit steigender Temperatur ab.

Die genannten Effekt führen dazu, daß bei den bekannten Spannungsreglern die Generatorausgangsspannung bzw. die Ladespannung der Batterie bei hohen Temperatur abgesenkt wird, dies kann dazu führen, daß die Batterie bei sehr hohen Außentemperaturen und kurzen Fahrstrecken nicht mehr genügend aufgeladen wird.

Aus der FR-A-2 562 733 sowie der FR-A-2 572 860 sind Spannungsregelsysteme für Generatoren, die von einer Brennkraftmaschine angetrieben werden, bekannt, bei denen die Regelspannung in Abhängigkeit von der Batterietemperatur beeinflußt wird. Dabei ist jeweils vorgesehen, unterhalb einer ersten Temperatur auf eine konstant hohe Spannung zu regeln, oberhalb der ersten Temperatur, jedoch noch unterhalb einer zweiten Temperatur auf eine mit steigender Temperatur fallende Spannung zu regeln und oberhalb der zweiten Temperatur wieder auf eine konstante, jedoch niedrigere Spannung zu regeln.

### Vorteile der Erfindung

Das erfindungsgemäße Verfahren mit den kennzeichnenden Merkmalen des Hauptanspruchs hat gegenüber dem bekannten den Vorteil, daß durch die Erhöhung der Generatorausgangsspannung bzw. der Ladespannung während eines bestimmten Zeitintervalls, vorzugsweise gleich nach dem Start des Fahrzeugs, eine sichere und rasche Aufladung der Fahrzeugbatterie auch bei hoher Umgebungstemperatur und bei kurzen Fahrstrecken erfolgt.

Besonders vorteilhaft ist, daß die Festlegung des Zeitintervalls innerhalb dem die Generatorausgangsspannung erhöht wird, in Abhängigkeit vom vorliegenden Ladezustand der Batterie erfolgt.

Weiterhin ist vorteilhaft, daß das erfindungsgemäße Verfahren keine besonderen Erfordernisse an die eingesetzten Batterien stellt und herkömmliche Spannungsregelungsprinzipien beibehalten werden können.

Durch die in den Unteransprüchen angegebenen Maßnahmen sind zusätzliche vorteilhafte Weiterbildungen und Verbesserungen des erfindungsgemäßen Verfahrens zu erzielen.

### Zeichnung

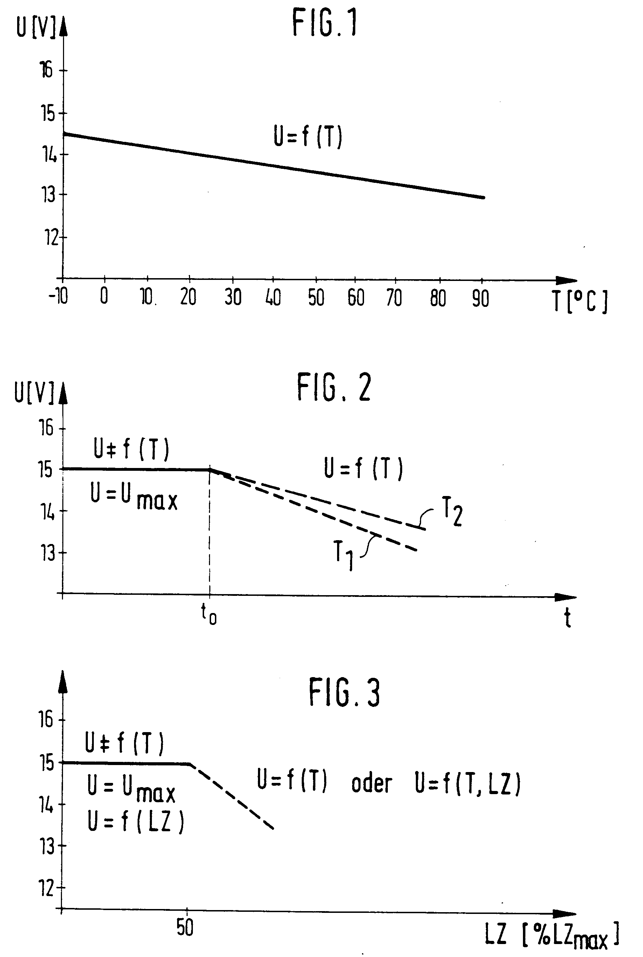

Figur 1 zeigt den Verlauf der Generatorausgangsspannung für einen aus dem Stand der Technik bekannten Spannungsregler, Figur 2 gibt den Verlauf der Generatorausgangsspannung in Abhängigkeit von der Zeit für ein erfindungsgemäßes Verfahren zur Spannungsregelung wieder und Figur 3 zeigt einen möglichen Verlauf der Generatorausgangsspannung in Abhängigkeit vom Ladezustand der Batterie.

### Beschreibung der Erfindung

Der Grundgedanke der vorliegenden Erfindung besteht darin, die Ausgangsspannung des Generators, die die Batterieladespannung darstellt, so festzulegen, daß in einem ersten Zeitintervall eine möglichst hohe Ladespannung gewählt wird, die eine rasche Aufladung der Batterie ermöglicht, während in einem zweiten Zeitintervall die Generatorausgangsspannung nach einer der bisher bekannten Methoden geregelt wird.

In Figur 1 ist eine Regelkennlinie, die die Temperaturabhängigkeit der Generatorausgangsspannung für einen aus dem Stand der Technik bekannten Spannungsregler, beispielsweise gemäß der DB-AS 16 38 065 wiedergibt. Dabei ist die Generatorausgangsspannung U in Volt über der Batterietemperatur T in Grad Celsius aufgetragen. Aus diesem Diagramm ist zu erkennen, daß die Spannungsregelung so erfolgt, daß die Generatorausgangsspannung mit zunehmender Temperatur linear abnimmt, so daß bei sehr hohen Temperaturen die Spannung soweit abgesenkt wird, daß eine zuverlässige Batterieladung nicht mehr sichergestellt ist.

Figur 2 gibt schematisch den Spannungsverlauf bei einem erfindungsgemäßen Verfahren zur Spannungsregelung wieder. Dabei ist die Generatorausgangsspannung bzw. Ladespannung U über der Zeit t aufgetragen.

Nach dem Einschalten der Brennkraftmaschine wird die Spannung auf einem relativ hohen konstanten Wert, vorzugsweise der maximal möglichen Ladespannung, eingestellt, sie bleibt auf diesem Wert bis zu einer wählbaren Zeit $t_o$. Nach der Zeit $t_o$ wird die Spannung auf einen niedrigeren Wert heruntergeregelt, wobei dieser Wert konstant sein kann oder eine Funktion der Temperatur sein kann. Insgesamt ist eine Unterteilung in zwei Zeitbereiche vorgesehen, wobei im ersten Bereich die Spannungsregelung temperaturunabhängig und im zweiten Bereich nach einer beliebigen herkömmlichen Methode erfolgen soll.

In Figur 3 ist ein weiteres erfindungsgemäßes Verfahren zur Spannungsregelung dargestellt, dabei ist die Generatorausgangsspannung bzw. Ladespannung U über der Batterieladung LZ dargestellt. Bei diesem Verfahren zur Spannungsregelung ist vorgesehen, daß bei einer Batterieladung, die zum Zeitpunkt des Einschaltens der Brennkraftmaschine weniger als 50 % der maximalen Batterieladung beträgt, die Generatorausgangsspannung bzw. Ladespannung U unabhängig von der herrschenden Umgebungstemperatur bzw. Batterietemperatur auf einen Wert $U_{max}$ eingestellt wird. Dieser Wert von $U_{max}$ wird dabei so hoch gewählt, daß die Batterie bei jeder Temperatur geladen wird, wobei eine dauernde Ladung mit $U_{max}$ zur Überladung der Batterie führen würde. Die Ladespannung wird dabei im einfachsten Fall während einer vorgebbaren Zeit $t_o$ auf den Maximalwert $U_{max}$ gehalten, nach einer vorgebbaren Zeit $t_o$ wird die Ladespannung in bekannter Weise in Abhängigkeit von der Temperatur geregelt.

In einer Ausgestaltung wird die Ladespannung während des gesamt ersten Zeitintervalls in Abhängigkeit vom Batterieladezustand geregelt. Dazu ist es erforderlich, daß der Ladezustand der Batterie zunächst nach dem Einschalten der Brennkraftmaschine gemessen wird und während des Ladevorgangs fortwährend korrigiert wird.

Zur Messung des Ladezustands der Batterie wird diese für einige Sekunden vom Bordnetz getrennt, danach wird die Batteriespannung gemessen und aus der so gemessenen Spannung unter Berücksichtigung der Batterietemperatur der Ladezustand der Batterie ermittelt. Zur Verbesserung der Meßgenauigkeit sollten die Oberflächenladungen der Batterie vor der Spannungsmessung mittels eines Entladestromstoßes entfernt werden.

Zur Messung des Ladezustandes der Batterie können auch andere Methoden vorgesehen werden, es ist auch möglich, mit einem Amperestundenzähler fortlaufend die Nachladung zu registrieren, so daß ständig der aktuelle Ladezustand der Batterie vorliegt.

Grundsätzlich ist es möglich, die Erhöhung der Ladespannung im ersten Zeitintervall nur dann vorzunehmen, wenn der Ladezustand der Batterie unterhalb eines bestimmten Wertes liegt und beispielsweise weniger als 50 % von der Maximalladung der Batterie beträgt.

Die Dauer des ersten Zeitintervalls, in dem die erhöhte Ladespannung herrscht, kann einen festen Wert, beispielsweise 15 Minuten umfassen, oder $t_o$ kann eine Funktion des ermittelten Ladezustands sein

$$t_o = f(LZ)$$

z.B. 15 Minuten bei 40 %, 30 Minuten bei 30 % usw., es ist jedoch auch möglich, daß das Ende des ersten Zeitintervalls $t_o$ dann erreicht wird, wenn der aktuelle Ladezustand der Batterie einen vorgebbaren Wert erreicht, beispielsweise 70 % des maximal möglichen Wertes des Ladezustandes.

Bei Vorliegen eines kritischen Ladezustandes der Batterie nach dem Abstellen der Brennkraftmaschine wird eine Anzeige am Armaturenbrett ausgelöst, diese Anzeige kann beispielsweise die Ladekontrollampe sein.

Wenn der Batterieladezustand während des normalen Ladebetriebs, z. B. bei einer Fahrt in heißer Umgebung, einen vorgebbaren Wert unterschreitet, kann während eines weiteren Zeitintervalls, dessen Länge entweder fest oder ebenfalls vom Ladezustand abhängig ist, ebenfalls mit erhöhter Generatorausgangsspannung bzw. Ladespannung U geladen werden.

**Patentansprüche**

1. Verfahren zur Spannungsregelung bei Brennkraftmaschinen, bei dem die von einem elektrischen, von der Brennkraftmaschine angetriebenen Generator erzeugte, der Ladespannung einer Batterie entsprechende Generatorausgangsspannung mittels eines Spannungsreglers geregelt wird und die Höhe der Generatorausgangsspannung während einer ersten Phase auf einen konstanten Wert und während einer zweiten Phase auf einen temperaturabhängigen Wert geregelt wird, dadurch gekennzeichnet, daß die Phasen Zeitintervallen entsprechen und die Länge des ersten Zeitintervalles in Abhängigkeit vom Ladezustand der Batterie festgelegt wird.

2. Verfahren zur Spannungsregelung nach Anspruch 1, dadurch gekennzeichnet, daß der Ladezustand der Batterie nach dem Einschalten der Brennkraftmaschine gemessen wird.

3. Verfahren zur Spannungsregelung nach Anspruch 2, dadurch gekennzeichnet, daß der Ladezustand der Batterie laufend ermittelt und das erste Zeitintervall nach Erreichen eines wählbaren Batterieladezustandes beendet wird.

4. Verfahren zur Spannungsregelung nach einem der vorhergehenden Ansprüche, dadurch gekennzeichnet, daß zur Bestimmung des Ladezustandes der Batterie diese kurzzeitig vom Bordnetz getrennt wird und die Messung des Ladezustandes nach einem Entladestromstoß mittels einer Spannungsmessung an einem Meßwiderstand erfolgt.

5. Verfahren zur Spannungsregelung nach Anspruch 1 oder 2 bis 4, dadurch gekennzeichnet, daß der Wert der Generatorausgangsspannung im ersten Zeitintervall in Abhängigkeit vom Ladezustand der Batterie gewählt wird.

6. Verfahren zur Spannungsregelung nach einem der vorhergehenden Ansprüche, dadurch gekennzeichnet, daß bei Vorliegen eines kritischen Ladezustandes der Batterie nach dem Abstellen der Brennkraftmaschine eine Anzeige erfolgt.

## Claims

1. Method for voltage control in internal combustion engines, in which the generator output voltage which is generated by an electric generator driven by the internal combustion engine and corresponds to the charge voltage of a battery is controlled by means of a voltage controller and the level of the generator output voltage is controlled during a first phase to be at a constant value and during a second phase to be at a temperature-dependent value, characterized in that these phases correspond to time intervals and the length of the first time interval is determined as a function of the charge state of the battery.

2. Method for voltage control according to Claim 1, characterized in that the charge state of the battery is measured after the internal combustion engine is switched on.

3. Method for voltage control according to Claim 2, characterized in that the charge state of the battery is continuously determined and the first time interval is terminated after a selectable battery charge state is reached.

4. Method for voltage control according to one of the preceding claims, characterized in that, in order to determine the charge state of the battery, the said battery is briefly disconnected from the vehicle's electrical system and the charge state is measured after a discharge current surge by means of a voltage measurement at a measuring resistor.

5. Method for voltage control according to Claim 1 or 2 to 4, characterized in that the value of the generator output voltage is selected in the first time interval as a function of the charge state of the battery.

6. Method for voltage control according to one of the preceding claims, characterized in that the presence of a critical charge state of the battery after the internal combustion engine is switched off is indicated.

## Revendications

1. Procédé de régulation de la tension de moteurs à combustion interne selon lequel on régule la tension de charge d'une batterie, fournie par un générateur électrique entraîné par le moteur et correspondant à la tension de sortie du générateur, à l'aide d'un régulateur de tension et on régule le niveau de la tension de sortie du générateur pendant une première phase sur une valeur constante et pendant une seconde phase sur une valeur dépendant de la température, procédé caractérisé en ce que les phases correspondent à des périodes et la durée de la première période est fixée en fonction de l'état de charge de la batterie.

2. Procédé de régulation de la tension de moteurs à combustion interne selon la revendication 1, caractérisé en ce qu'on mesure l'état de charge de la batterie après mise en route du moteur à combustion interne.

3. Procédé de régulation de la tension de moteurs à combustion interne selon la revendication 2, caractérisé en ce qu'on détermine en permanence l'état de charge et on termine la première période lorsqu'on atteint un état de charge de batterie, choisi.

4. Procédé selon l'une des revendications précédentes, caractérisé en ce que pour déterminer l'état de charge de la batterie on coupe la batterie pendant un court instant par rapport au circuit embarqué et on mesure l'état de charge après avoir envoyé un choc de courant de décharge, en mesurant la tension sur une résistance de mesure.

5. Procédé de régulation de tension selon la revendication 1 ou 2 à 4, caractérisé en ce que dans la première période on choisit la valeur de la tension de sortie du générateur en fonction de l'état de charge de la batterie.

6. Procédé de régulation de tension selon l'une des revendications précédentes, caractérisé en ce qu'en présence d'un état de charge critique de la batterie il y a un affichage après l'arrêt du moteur à combustion interne.

## FIG.1

U [V]

$U = f(T)$

T [°C]

## FIG. 2

U[V]

$U \neq f(T)$

$U = U_{max}$

$U = f(T)$

$T_2$

$T_1$

$t_0$

t

## FIG.3

$U \neq f(T)$

$U = U_{max}$
$U = f(LZ)$

$U = f(T)$ oder $U = f(T, LZ)$

50

LZ [%$LZ_{max}$]